Europäisches Patentamt

European Patent Office

Office européen des brevets

(19)

(11) Numéro de publication : **0 483 013 A1**

# (12) DEMANDE DE BREVET EUROPEEN

(21) Numéro de dépôt : **91402853.5**

(22) Date de dépôt : **25.10.91**

(51) Int. Cl.⁵ : **F16J 15/12**

(30) Priorité : **26.10.90 FR 9013271**

(43) Date de publication de la demande :
**29.04.92 Bulletin 92/18**

(84) Etats contractants désignés :
**DE ES GB IT**

(71) Demandeur : **REGIE NATIONALE DES USINES RENAULT S.A.**
**34, Quai du Point du Jour**
**F-92109 Boulogne Billancourt Cédex (FR)**

(72) Inventeur : **Francisco, Fernando**
**10, Square du Docteur Courcoux**
**F-93260 Les Lilas (FR)**

(54) **Joint de culasse pour moteur à combustion interne.**

(57)   Joint de culasse pour moteur à combustion interne du type comprenant une plaque (1) formant l'armature, des joints d'étanchéité au passages des fluides, constitués notamment par des segments de feu (5) pour l'étanchéité aux gaz au niveau de chaque chambre de combustion, des trous (4) alignés le long des bords longitudinaux pour le passage des vis de fixation pour le montage de la culasse sur le carter cylindres caractérisé en ce que la plaque (1) présente des zones, au voisinage des bords transversaux (7), de plus grande raideur de manière à diminuer la flexion de la culasse lors de son serrage sur le carter cylindres.

FIG 1

EP 0 483 013 A1

La présente invention a trait à un joint de culasse pour moteur à combustion interne.

Un joint de culasse est situé entre le carter cylindres et la culasse et doit remplir plusieurs fonctions et notamment:

– assurer l'étanchéité au liquide de refroidissement et au liquide de lubrification, qui circulent entre le carter cylindres et la culasse ;

– assurer l'étanchéité aux gaz de combustion à des pressions et des températures élevées ;

– règler l'épaisseur disponible entre la culasse et le carter cylindres en faisant office de butée de serrage ;

– compenser les irrégularités géométriques des plans de joint de la culasse et du carter cylindres, de façon à maintenir le contact et conserver l'étanchéité initiale, malgré la déformation du moteur survenant au cours du fonctionnement de celui-ci.

Habituellement, les fonctions d'étanchéité du joint de culasse sont différenciées :

– l'étanchéité au liquide de refroidissement eau-glycol et à l'huile de lubrification est en général réalisée par le matériau de base du joint constitué, soit par du carton d'amiante agrafé sur une tôle perforée, soit par un tissu métallique enduit sur ses deux faces d'un mélange fibres d'amiante-élastomère, etc.

– l'étanchéité aux gaz de combustion est généralement réalisée par des anneaux de feu métalliques en acier , acier électrozingué, acier plaqué d'aluminium, etc..

L'ensemble de ces étanchéités est obtenu grâce à un fort serrage de la culasse sur le carter cylindres par l'intermédiaire des vis de serrage. Ce fort serrage a cependant l'inconvénient d'engendrer des déformations de la culasse et des chemises d'autant plus grandes qu'il est plus élevé et en particulier une flexion de la culasse préjudiciable au fonctionnement de l'arbre à cames.

Le document FR-2.176.450 décrit l'utilisation de nervures de support, en saillie à la surface d'une plaque formant joint de culasse, sensées par un effet de porte-à-faux contrôlé réduire les déformations des surfaces correspondantes.

Toutefois, la répartition de ces nervures tout le long des bords longitudinaux de la plaque tel que recommandé dans le document précité n'apporte aucune solution au problème de la flexion longitudinale de la culasse.

L'objet de la présente invention est la réalisation d'un joint de culasse qui limite la flexion de la culasse lors de son serrage et cela d'une manière particulièrement simple et économique.

Le joint de culasse pour moteur à combustion interne selon l'invention comprend une plaque formant l'armature, des joints d'étanchéité aux passages des fluides, constitués notamment par des segments de feu pour l'étanchéité aux gaz au niveau de chaque chambre de combustion, des trous alignés le long des bords longitudinaux pour le passage des vis de fixation pour le montage de la culasse sur le carter cylindres.

Selon l'invention le joint de culasse est caractérisé en ce que la plaque présente des zones, au voisinage des bords transversaux, de plus grande raideur de manière à diminuer la flexion de la culasse lors de son serrage sur le carter cylindres.

Selon un mode de réalisation de l'invention, les zones de plus grande raideur se situent entre les bords transversaux et les trous extrêmes de fixation.

Selon un mode de réalisation de l'invention la plaque comporte des sur-épaisseurs au voisinage des bords transversaux constituant les zones de plus grande raideur.

Selon un mode de réalisation de l'invention les zones de plus grande raideur sont constituéees par des renforts métalliques fixés sur au moins l'une des faces de la plaque.

Selon un mode de réalisation de l'invention les zones de plus grande raideur sont contituées par des dépôts de résine sur au moins l'une des faces de la plaque.

D'autres caractéristiques et avantages de la présente invention résulteront de la description qui suit et qui se réfère au dessin en annexe pour illustrer, de manière non limitative un joint suivant la présente invention et dans lequel :

– La figure 1 est une vue schématique en plan d'un joint pour moteur à combustion interne à quatre cylindres en ligne,

– La figure 2 est une vue partielle en coupe suivant la ligne II II de la figure 1.

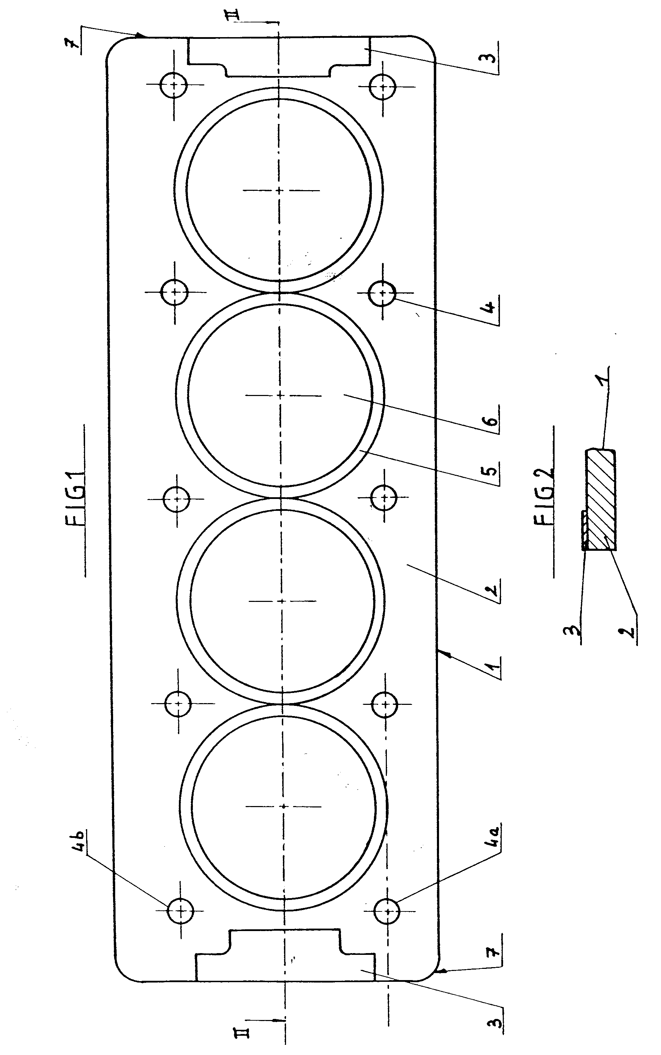

Sur les figures 1 et 2, le repère 1 désigne un joint de culasse d'un moteur à combustion interne, présentant extérieurement une forme sensiblement rectangulaire et comportant quatre trous centraux 6 alignés selon l'axe longitudinal du joint et capables d'être placés en concordance avec les fûts des cylindres du moteur en question.

A proximité de ses bords latéraux et longitudinaux, le joint 1 présente une série de trous, non figurés, qui peuvent être placés en concordance avec les passages d'eau de refroidissement ou d'huile de graissage pratiqués dans la culasse et le carter cylindres.

Le joint 1 comporte en outre une série de trous 4 qui sont disposés à proximité des trous centraux 6 et sont alignés le long de deux files parallèles à l'axe longitudinal du joint 1 et disposés sur les côtés opposés de celui-ci. Les trous 4 sont prévus pour permettre le passage des vis destinées à unir la culasse et le carter cylindres.

Le bord des trous centraux 6 sont protégés par le montage de bordages métalliques 5 qui empêchent l'infiltration des gaz au travers de matériau constitutif du joint.

Conformément à l'invention entre les bords transversaux 7 et les trous externes de fixation 4a, 4b, le joint 1 comporte des sur-épaisseurs 3.

Ces surépaisseurs 3 sont réalisées par des plaques ou renforts métalliques fixées sur l'une, et/ou l'autre des faces du joint.

Ces surépaisseurs 3 ont pour rôle d'accroître localement la raideur du joint 1 de façon à modifier lors du serrage de la culasse sur le carter cylindres la répartition des moments fléchissants dans la culasse.

On réduit de cette façon la flexion longitudinale de la culasse et les contraintes internes.

Ce qui a pour avantage de réduire les jeux de fonctionnement de l'arbre à cames dans ses paliers et donc de diminuer les bruits de distribution. Par ailleurs la diminution des contraintes de traction réduit les risques de rupture de la culasse dans les zones structurellement, fragiles comme les pontets intersoupapes ou les préchambres de combustion dans le cas des moteurs diésels à chambres de turbulence.

Il est évident que l'invention n'est pas limitée aux réalisations décrites et qu'on peut y apporter des variantes d'exécution. Ainsi pour réaliser les surépaisseurs 3 on peut utiliser des dépôts de résine sur l'une et/ou l'autre face du joint. Dépôts qui engendrent également un accroissement de raideur du joint.

## Revendications

[1] Joint de culasse pour moteur à combustion interne du type comprenant une plaque (1) formant l'armature, des joints d'étanchéité aux passages des fluides, constitués notamment par des segments de feu (5) pour l'étanchéité aux gaz au niveau de chaque chambre de combustion, des trous (4) alignés le long des bords longitudinaux pour le passage des vis de fixation pour le montage de la culasse sur le carter cylindres caractérisé en ce que la plaque (1) présente aux deux extrémités transversales et en arrière desdits trous (4) de vis, des zones de plus grande raideur, de manière à diminuer la flexion longitudinale de la culasse lors de son serrage sur le carter cylindres.

[2] Joint de culasse selon la revendication 1 caractérisé en ce que lesdites zones se situent entre les bords transversaux (7) et les trous extrêmes de fixation (4a, 4b).

[3] Joint de culasse selon l'une quelconque des revendications 1 à 2 caractérisé en ce que la plaque (1) comporte des sur-épaisseurs (3) au voisinage des bords transversaux (7), constituant les dites zones de plus grande raideur.

[4] Joint de culasse selon l'une quelconque des revendications 1 à 3 caractérisé en ce que la plaque (1) comporte, fixés sur au moins une des faces, des renforts métalliques (3) au voisinage des bords transversaux (7), constituant lesdites zones de plus grande raideur.

[5] Joint de culasse selon l'une quelconque des revendications 1 à 4 caractérisé en ce que la plaque (1) comporte, déposées sur au moins une des faces, des couches de résines au voisinage des bords transversaux (7) constituant les dites zones de plus grande raideur.

FIG1

4b

7

II

II

4

EP 0 483 013 A1

3

7

4a

1

2

5

6

4

3

FIG2

3

2

1

Office européen
des brevets

**RAPPORT DE RECHERCHE EUROPEENNE**

Numero de la demande

EP    91 40 2853

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 176 450 (NICHOLSON) <br> * page 3, ligne 34 - page 4, ligne 11 * <br> * page 4, ligne 33 - page 5, ligne 6 * <br> * page 5, ligne 34 - page 6, ligne 11 * <br> * figures 1,2,5 * <br> --- | 1-4 | F16J15/12 |
| A | EP-A-0 230 804 (NIHON METAL GASKET KABUSHIKI KAISHA) <br> * page 4, colonne 5, ligne 28 - page 8, colonne 13, ligne 35; figures * <br> --- | 1-5 | |
| A | GB-A-1 412 469 (SOCIETE DETUDES DE MACHINES THERMIQUES) <br> * page 2, ligne 24 - page 2, ligne 94; figures * <br> ----- | 1 | |
| | | | **DOMAINES TECHNIQUES RECHERCHES (Int. Cl.5 )** |
| | | | F16J <br> F02F |

**Le présent rapport a été établi pour toutes les revendications**

| Lieu de la recherche | Date d'achèvement de la recherche | Examinateur |
|---|---|---|
| LA HAYE | 06 DECEMBRE 1991 | MOUTON J.M.M.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)